# EUROPEAN PATENT APPLICATION

(11) **EP 4 768 551 A1**
(43) Date of publication of application: **01.07.2026**
(21) Application number: 24223203.1
(22) Date of filing: 24.12.2024
(51) Int. Cl.: C09K 5/10

(54) **ENHANCING THE BUFFERING AND COLOUR STABILITY OF A HEAT TRANSFER COMPOSITION**

(71) Applicant: Arteco NV, 2900 Schoten (BE)
(72) Inventor: VERLENT, Isabel, 2900 Schoten (BE); CLERICK, Sander, 2900 Schoten (BE)
(74) Representative: Ipsilon Belgium

(57) **Abstract**

The present invention relates to heat-transfer composition comprising a base fluid comprising an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof; a polyol amine with a molecular weight less than 500 g/mol; and a S-based compound. The invention further relates to methods of exchanging heat and uses of the heat transfer composition of the invention.

## Description

### Field of the invention

The present invention relates to heat transfer compositions which comprise a polyol amine and a sulfur-based antioxidant. The invention further relates to concentrates and ready-to-use formulations of the heat-transfer composition and uses employing said sulfur-based antioxidant based heat-transfer compositions. The invention further relates to methods of exchanging heat which comprises circulating heat-transfer compositions comprising a polyol amine and a sulfur-based antioxidant through a heat exchanger.

### Summary of the invention

Heat-transfer fluids are widely employed in heat exchange systems associated with electrical, combustion or hybrid cars, solar systems, fuel cells, data centers, generators, electronic equipment and the like. Heat-transfer fluids are generally composed of a base fluid and one or more additives.

Historically, water has been the preferred base fluid with a view to heat-transfer properties. In many applications, antifreeze properties are needed and in such cases a base fluid consisting of water mixed with freezing point depressants like alcohols, glycols or salts is employed. Glycol based heat transfer fluids have several advantages. For example, they possess a low freezing point combined with a low viscosity and high flash point, and the safety profile of different glycols has been extensively studied.

The additives present in heat-transfer fluids may be employed to obtain a variety of functionalities, such as (further) lowering of the freezing point, improving the heat-exchange properties, inhibiting corrosion, et cetera. Since heat transfer fluids are in continuous contact with metal parts (aluminium alloys, cast iron, steel, copper, brass, solder, et cetera) they nearly always contain one or more corrosion inhibitors.

During operation, the antifreeze liquid may start to age and as an effect the pH can drop during its use. This pH drop may be accelerated by the systematically formed breakdown acids (e.g. glycolic acid, oxalic acid, lactic acid) of alcohols, particularly glycols, used in the base fluid. Similarly, exposure to high temperatures over time can lead to the oxidation of glycols and other substances within the coolant, producing acids that contribute to corrosion and a decrease in pH stability.

A decrease in pH of the coolant is undesirable in both combustion engines and electrical applications, such as fuel cells, batteries, electrical machines or power electronics. A stable pH for coolants in combustion engines prevents corrosion, especially of aluminium parts which causes pitting and weakening. The pH drop not only shortens the lifespan of engine components but also impairs heat transfer, leading to overheating or reduced efficiency. Heat-transfer fluids for use in electrical applications need to have low electrical conductivity (i.e. high electrical resistance) to prevent short-circuits and should be capable of maintaining this throughout the lifetime of the heat-transfer fluid.

Hence, in recent years there has been an increased interest in developing heat-transfer fluids which do not become significantly more electrically conductive upon aging.

To prevent the pH drop associated with the ageing of heat-transfer fluids, a buffer is typically added to maintain a stable pH, reduce the risk of corrosion and extend the lifetime of the equipment. Amine buffers, including primary amines (e.g. tris(hydroxymethyl)aminomethane buffer) and tertiary amines (e.g. triethanolamine and triisopropanolamine) are known suitable buffers. Over time the buffers themselves can degrade and some buffer solutions may turn yellow or brown as they oxidize or break down, thereby causing unwanted discoloration of the antifreeze. The breakdown of the buffer component also results in a negative impact on the pH stability and overall buffer capacity.

Similarly, antioxidants are commonly used in coolant compositions to prevent acid formation by inhibiting oxidative degradation of the coolant's base components. The inclusion of antioxidants helps to maintain pH levels, reduce corrosion risk, and prevent discoloration of the fluid. As per buffers, antioxidants themselves are also susceptible to degradation, especially under high-temperature and high-stress conditions, reducing their effectiveness. This can contribute to the discoloration of the coolant, reduced pH stability and increased corrosion risk to metal components.

Therefore, there is still a need for glycol based coolant compositions which prevent unwanted discoloration and the formation of breakdown acids from the glycol.

WO2022259994A1 discloses a coolant comprising ethylene oxide adducts of an alkylamine and/or an ethylene oxide adduct of an alkyldiamine. The composition preferably contains at least one antioxidant to suppress the corrosion of metals.

WO2000017951A1 discloses a glycol-based coolants comprising a buffer to reduce the decomposition of glycol. Sodium phosphate was used as a suitable buffer.

JP7392241B2 discloses a coloured coolant composition for fuel cell vehicles which contains a sulfur-atom containing and/or a nitrogen atom-containing compound as an antioxidant. The cooling system of a fuel cell vehicle incorporates an ion-exchange resin to maintain low conductivity within the range of 0 to 10 µS/cm.

It is an object of the present invention to provide improved heat-transfer compositions, preferably glycol based, which maintain their pH value upon ageing.

It is an object of the present invention to provide heat-transfer compositions which do not discolour upon ageing.

It is an objective of the present invention to provide methods of exchanging heat and uses of associated compositions which allow low electrical conductivity of a heat-transfer composition to be maintained.

It is a further object of the present invention to provide heat-transfer compositions, preferably glycol based, which are suitable for use as a coolant in electrical and combustion systems.

It is a further object of the present invention to provide heat-transfer compositions, glycol based, possessing extended service life compared to known heat-transfer compositions.

### Summary of the invention

The present inventors have surprisingly found that the addition of a sulfur atom-containing compounds improves the buffer stability of heat transfer compositions and prevents an undesired pH drop in heat-transfer compositions. Indeed, the resulting heat-transfer compositions exhibit significantly less discoloration and formation of less breakdown acids as shown in the appended examples. Without wishing to be bound by theory, the present inventors believe that the sulfur atom-containing compounds act as an antioxidant thereby reducing the load on the amine buffer by limiting acid formation and the amine buffer helps mitigate any remaining acid buildup, thus enhancing the overall longevity and stability of the coolant.

In a first aspect of the invention, there is provided a heat-transfer composition comprising:
- a base fluid comprising an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof;
- a polyol amine with a molecular weight less than 500 g/mol;
- a compound according to formula (I):

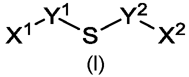

wherein X¹ and X² are independently -H, -OH, -CHO or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2}, R^{b1} and R^{b2} are independently a bond, a C₁-C₈ alkanediyl or a C₂-C₈ alkenediyl,
wherein at least one of Y¹ and Y² comprises a carbon atom; and
wherein n1 and n2 are independently 0, 1, 2, 3, 4 or 5.

In a preferred embodiment of the invention, the molar ratio of polyol amine to the compound according to formula (I) is within the range of 0.5:1 to 20:1, preferably within the range of 0.8:1 to 10:1 respectively.

In a preferred embodiment of the invention, the heat-transfer composition according to the invention is a ready-to-use composition wherein:
- the combined amount of water, alcohol, polyol amine and the compound according to formula (I) is more than 90 wt.%, preferably more than 92 wt.%, more preferably more than 93 wt.% by total weight of the ready-to-use composition;
- the polyol amine is within the range of 0.001 to 10 wt.%, preferably within the range of 0.01 to 5 wt.%, more preferably within the range of 0.01 to 2 wt.% by total weight of the ready-to-use composition.

In preferred embodiments of the invention, the heat-transfer composition according to the invention is a concentrate suitable to prepare the ready-to-use composition according to the invention by addition of water and/or an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol and mixtures thereof.

In a preferred embodiment of the invention, the pH of the heat-transfer composition is between 6 and 10, preferably between 6.5 and 9.5, more preferably between 7 and 9.

In another aspect of the invention, there is provided a method of exchanging heat, comprising:
a. providing a heat-transfer composition in accordance with heat-transfer composition of the invention, or the ready-to-use composition according to the invention;
b. generating heat in a system selected from a combustion engine, a solar system, a fuel cell, an electrical motor, a generator, a battery, a battery electric vehicle, or electronic equipment, preferably in a combustion engine;
c. contacting the composition of step (a) with the system of step (b);
d. transferring heat from the system to the composition;
e. passing the composition through a heat exchanger; and
f. transferring heat away from the composition.

In another aspect of the invention, there is provided the use of a compound according to formula (I): 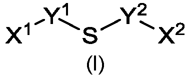
wherein X¹ and X² are independently -H, -OH, -CHO or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2}, R^{b1} and R^{b2} are independently a bond, a C₁-C₈ alkanediyl or a C₂-C₈ alkenediyl,
wherein at least one of Y¹ and Y² comprises a carbon atom; and
wherein n1 and n2 are independently 0, 1, 2, 3, 4 or 5
for:
- prolonging the corrosion inhibiting properties of a heat-transfer composition comprising a corrosion inhibitor; and/or
- preventing the coloration or reducing the formation of a coloured heat-transfer composition, especially at temperatures greater than 100 °C, more preferably at temperatures greater than 120 °C; and/or
- extending the service life of a heat-transfer composition by reducing, postponing or avoiding the formation of electrically conductive acids such as glycolates; and/or
- preventing a pH change of a heat-transfer composition, especially at temperatures greater than 100 °C, more preferably at temperatures greater than 120 °C; and/or
- improving the thermal stability of a heat-transfer composition.

### Description of embodiments

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

Whenever reference is made throughout this document to a compound which is a salt, this should be construed to include the anhydrous form as well as any solvates (in particular hydrates) of this compound, unless explicitly defined otherwise.

Reference is made to substances, components, or ingredients in existence at the time just before first contacted, blended, or mixed with one or more other substances, components, or ingredients in accordance with the present disclosure. A substance, component or ingredient may gain an identity, property, or character through a chemical reaction or transformation during the course of contacting, blending, or mixing if conducted in accordance with this disclosure with the application of common sense and the ordinary skills of an average chemist. Definitions of substances, components, or ingredients and their relative amounts concern the composition as it is prepared at the time of first contacting the ingredients, unless expressly indicated otherwise.

The term alkanediyls as used herein includes straight, branched and cyclic alkanediyls.

The term alkenediyl as used herein refers to an divalent unsaturated aliphatic group with a carbon atom as the point of attachment, a linear or branched, cyclo, cyclic or acyclic structure, at least one nonaromatic carbon-carbon double bond, and no atoms other than carbon and hydrogen.

Electrical conductivity as referred to herein is preferably measured in accordance with ASTM D1125-23 preferably with a Mettler-Toledo SevenExcellence Cond meter S700-Std-Kit electrical conductivity meter equipped with a SevenExcellence Cond meter S700-Std-Kit.

The term 'thermal contact' refers to any arrangement that allows heat produced by the electrical system to be transferred to the heat-transfer fluid or composition thereof by heat transfer.

### Heat-Transfer Composition

In a first aspect of the invention, there is provided a heat-transfer composition comprising:
- a base fluid comprising an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof;
- a polyol amine with a molecular weight less than 500 g/mol;
- a compound according to formula (I): 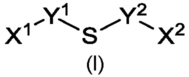
   wherein X¹ and X² are independently -H, -OH, -CHO or -COOH;
   wherein Y¹ is -R^{a1}-(OCH₂CH₂)ₙ₁-R^{b1}-;
   wherein Y² is -R^{a2}-(OCH₂CH₂)ₙ₂-R^{b2}-;
   wherein R^{a1}, R^{a2}, R^{b1} and R^{b2} are independently a bond, a C₁-C₈ alkanediyl or a C₂-C₈ alkenediyl,
   wherein at least one of Y¹ and Y² comprises a carbon atom; and
   wherein n1 and n2 are independently 0, 1, 2, 3, 4 or 5.

In some embodiments of the invention, there is provided the compound according to formula (I):
wherein X¹ and X² are independently -H, -OH or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2}, R^{b1} and R^{b2} are independently a bond, a C₁-C₈ alkanediyl or a C₂-C₈ alkenediyl,
wherein at least one of Y¹ and Y² comprises a carbon atom; and
wherein n1 and n2 are independently 0, 1, 2.

In preferred embodiments of the invention, there is provided the compound according to formula (I):
wherein X¹ and X² are independently -H, -OH or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2}, R^{b1} and R^{b2} are independently a bond, a C₁-C₄ alkanediyl or a C₂-C₄ alkenediyl,
wherein at least one of Y¹ and Y² comprises a carbon atom; and
wherein n1 and n2 are independently 0, 1, 2.

In preferred embodiments of the invention, there is provided the compound according to formula (I):
wherein X¹ and X² are independently -H, -OH or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2} are both bonds, and R^{b1} and R^{b2} are independently selected from a C₁-C₈ alkanediyl or a C₂-C₈ alkenediyl, preferably C₁-C₄ alkanediyl or a C₂-C₄ alkenediyl
wherein at least one of Y¹ and Y² comprises a carbon atom; and
wherein n1 and n2 are both 0.

In preferred embodiments of the invention, there is provided the compound according to formula (I):
wherein X¹ and X² are independently -H, -OH or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2} are both bonds, and R^{b1} and R^{b2} are independently selected from a C₁-C₂ alkanediyl;
wherein at least one of Y¹ and Y² comprises a carbon atom; and
wherein n1 and n2 are both 0.

In some embodiments of the invention, there is provided a compound according to formula (I):
wherein X¹ and X² are independently -H, -OH, -CHO or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2}, R^{b1} and R^{b2} are independently a bond, a C₁-C₈ alkanediyl or a C₂-C₈ alkenediyl,
wherein both Y¹ and Y² comprises a carbon atom; and
wherein n1 and n2 are independently 0, 1, 2, 3, 4 or 5.

In preferred embodiments of the invention, the compound according to formula (I) is selected from the group consisting of thiodiglycol, thiodiglycolic acid, 3,3'-thiodipropionic acid, 2-(ethylthio) ethanol, and thioglycolic acid. In highly preferred embodiments of the invention, the compound according to formula (I) is selected from the group consisting of thiodiglycol, thiodiglycolic acid, 3,3'-thiodipropionic acid and 2-(ethylthio) ethanol. In some embodiments of the invention, the compound according to formula (I) is selected from the group consisting of thiodiglycol, thiodiglycolic acid and 2-(ethylthio) ethanol.

In preferred embodiments of the invention, the concentration of the compound according to formula (I) in the heat transfer composition is at least 0.05 wt.%, preferably at least 0.1 wt.%, preferably at least 0.25 wt.%, more preferably at least 0.5 wt.%, most preferably at least 1 wt.% by total weight of the heat-transfer composition. The compound according to formula (I) is typically comprised in the composition at a concentration of less than 5 wt.%, preferably less than 3 wt.%, more preferably less than 2 wt.%, most preferably less than 1 wt.%, by total weight of the composition. In embodiments of the invention, in particular those wherein the compound according to formula (I) is selected from compounds as defined herein elsewhere, the total amount of the compound according to formula (I) in the composition is within the range of 0.01-5 wt.%, preferably within the range of 0.05-2 wt.%, more preferably within the range of 0.1-1 wt.%.

In some embodiments of the invention, the compound according to formula (I) comprises a molecular weight of less than 1000 g/mol, preferably less than 750 g/mol, preferably less than 500 g/mol, preferably less than 250 g/mol.

In some embodiments of the invention, the compound according to formula (I) exhibits a solubility of at least 1 g/l, preferably at least 5 g/l, most preferably at least 10 g/l, preferably at least 20 g/l, preferably at least 30 g/l, preferably at least 50 g/l in water.

In preferred embodiments of the invention, the molar ratio of polyol amine to the compound according to formula (I) is within the range of 0.5:1 to 20:1, preferably within the range of 0.6:1 to 15:1, more preferably within the range of 0.8:1 to 12:1 respectively, more preferably within the range of 0.9:1 to 10:1 and most preferably within the range of 1:1 to 8:1. In some embodiments, the molar ratio of polyol amine to the compound according to formula (I) is within the range of 0.5:1 to 6:1, preferably within the range of 1:1 to 5:1, preferably within the range of 2:1 to 4:1 and more preferably within the range of 2.5:1 to 3.5:1 respectively. In some embodiments, the molar ratio of polyol amine to the compound according to formula (I) is within the range of 1:0.1 to 1:3, preferably within the range of 1:0.3 to 1:2 respectively.

In some embodiments of the invention, the weight ratio of base fluid, polyol amine and compound according to formula (I) is within the range of 180:1.2:0.8 to 280:2.5:1.5, preferably within the range of 200:1.5:1 to 250:2:1, more preferably within the range of 230:1.65:1 respectively.

The heat-transfer composition preferably has a pH within the range of 3-12, preferably within the range of 4-12, preferably within the range of 5-10, preferably within the range of 6-10, preferably within the range of 6.5-9.5, preferably within the range of 7 to 9.

In some embodiments, the electrical conductivity at 25 °C is between 500 to 5000 µS/cm, preferably between 500 to 4000 µS/cm,more preferably between 800 to 3000 µS/cm,even more preferably between 1500 to 2500 µS/cm. In further embodiments, the electrical conductivity at 25 °C is between 600 to 4500 µS/cm,or between 1000 to 3500 µS/cm,or between 1800 to 2800 µS/cm. In preferred embodiments, the electrical conductivity at 25 °C is less than 5000 µS/cm,preferably less than 4000 µS/cm,more preferably less than 3000 µS/cm,more preferably less than 2000 µS/cm and most preferably less than 1000 µS/cm.

In some embodiments, the electrical conductivity at 25 °C is between 10 to 200 µS/cm, preferably between 30 to 170 µS/cm,more preferably between 50 to 150 µS/cm,even more preferably between 70 to 130 µS/cm. In highly preferred embodiments of the invention, the electrical conductivity of the heat-transfer composition is less than 500 µS/cm,preferably less than 300 µS/cm,preferably less than 200 µS/cm,preferably less than 150 µS/cm,preferably less than 100 µS/cm,preferably less than 50 µS/cm,more preferably less than 25 µS/cm,more preferably less than 10 µS/cm,most preferably less than 5 µS/cm.

In preferred embodiments of the invention, the coolant is substantially free of oil, preferably substantially free of mineral oil.

### Polyol Amine

As will be understood by those skilled in the art, polyol amines are amines that contain at least two hydroxyl groups, preferably at least three hydroxyl groups. In preferred embodiments, the polyol amine comprises a molecular weight of less than 1000 g/mol, preferably less than 800 g/mol, preferably less than 700 g/mol, preferably less than 500 g/mol, preferably less than 400 g/mol, less than 300 g/mol, preferably less than 250 g/mol and most preferably less than 200 g/mol.

In some embodiments, the polyol amine is preferably selected from the group consisting of triethanolamine (TEOA), triisopropanolamine (TIPA), tris(hydroxymethyl)aminomethane (TRIS), diethanolamine, 2-amino-1,3-propanediol, N-methyldiethanolamine, 1,4-diaminobutane-2,3-diol, 2-amino-2-methyl-1,3-propanediol, N-ethyldiethanolamine and/or 2-amino-2-ethyl-1,3-propanediol. In preferred embodiments, the polyol amine is selected from the group consisting of triethanolamine (TEOA), triisopropanolamine (TIPA) and/or tris(hydroxymethyl)aminomethane (TRIS). In highly preferred embodiments of the invention, the polyol amine is triethanolamine.

In some embodiments of the invention, the polyol amines have a pKa within the range of 4 to 11, preferably within the range of 5 to 10, more preferably within the range of 6 to 9 and most preferably within the range of 6.5 to 8.

In some embodiments, the polyol amine exhibits a solubility of at least 1 g/l, preferably at least 5 g/l, most preferably at least 10 g/l, preferably at least 20 g/l, preferably at least 30 g/l, preferably at least 50 g/l, preferably at least 60 g/l in water.

In preferred embodiments of the invention, the concentration of the polyol amine compound in the heat transfer composition is at least 0.05 wt.%, preferably at least 0.1 wt.%, more preferably at least 0.5 wt.%, most preferably at least 1 wt.% by total weight of the composition. The polyol amine compound is typically comprised in the composition at a concentration of less than 10 wt.%, preferably less than 6 wt.%, more preferably less than 4 wt.%, most preferably less than 3 wt.%, by total weight of the composition. In embodiments of the invention, in particular those wherein the polyol amine compound is selected from compounds as defined herein elsewhere, the total amount of polyol amine compounds in the composition is within the range of 0.05-10 wt.%, preferably within the range of 0.1-6 wt.%, more preferably within the range of 0.5-4 wt.%, most preferably within the range of 1-3 wt.%.

### Base Fluid

In accordance with the invention, the base fluid comprises an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof. In preferred embodiments, the base fluid comprises an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, and combinations thereof.

As used herein, "monoethylene glycol" should be interpreted to mean "ethane-1,2-diol", and is interchangeably referred to as "MEG".

As used herein, "monopropylene glycol" should be interpreted to mean "propane-1,2-diol", and is interchangeably referred to as "MPG".

As used herein, the term "glycerol" means "propane-1,2,3-triol" and is synonymous with glycerin. In preferred embodiments of the invention the base fluid consists of water, monoethylene glycol, monopropylene glycol, 1,3-propanediol, glycerol or mixtures thereof.

In preferred embodiments, the glycol is not a surfactant, preferably not a surfactant derived from acetylene glycol. In preferred embodiments, the glycol is not an ethoxylated acetylenic gemini surfactant such as DYNOL^{™} 604, or an ethoxylated acetylenic diol surfactant such as SURFYNOL^{®} 465.

In preferred embodiments of the invention the base fluid consists of water and an alcohol, wherein the alcohol is present in an amount of 10-99.5 wt.% (by weight of the base fluid), preferably 10-80 wt.%, more preferably 30-70 wt.%. In particular embodiments the alcohol is present in an amount in the range of 33-60 wt.% (by weight of the base fluid).

In embodiments of the invention, the base fluid comprises more than 50 wt.% water (by weight of the base fluid), preferably more than 70 wt.%, more preferably more than 85 wt.%.

In embodiments of the invention, the base fluid comprises more than 50 wt.% monoethylene glycol (by weight of the base fluid), preferably more than 70 wt.%, more preferably more than 85 wt.%, most preferably more than 95 wt.% monoethylene glycol.

In embodiments of the invention, the base fluid comprises more than 50 wt.% monopropylene glycol (by weight of the base fluid), preferably more than 70 wt.%, more preferably more than 85 wt.%, most preferably more than 95 wt.% monopropylene glycol.

In embodiments of the invention, the base fluid comprises more than 50 wt.% 1,3-propane diol (by weight of the base fluid), preferably more than 70 wt.%, more preferably more than 85 wt.%, most preferably more than 95 wt.% 1,3-propane diol.

In embodiments of the invention, the base fluid comprises more than 50 wt.% glycerol (by weight of the base fluid), preferably more than 70 wt.%, more preferably more than 85 wt.%, most preferably more than 95 wt.% glycerol.

In preferred embodiments of the invention, the heat-transfer fluid comprises more than 78 wt.% (by total weight of the heat-transfer composition) of base fluid, more preferably more than 85 wt.%, even more preferably more than 90 wt.%, still more preferably more than 95 wt.% or more than 96.5 wt.% of base fluid.

As will be understood by the person skilled in the art, the base fluid is normally added to the heat-transfer composition *'quantum satis'.* In embodiments of the invention, the heat-transfer fluid comprises less than 99.9 wt.% base fluid (by total weight of the heat-transfer fluid), such as less than 99.8 wt.%, less than 99.5 wt.% or less than 99 wt.%, less than 98 wt.% of base fluid.

In some embodiments of the invention, the base fluid is provided wherein water and the alcohol are present in a weight ratio of 95:5 to 5:95 by total weight of the heat-transfer fluid. In other embodiments, the base fluid is provided wherein water and the alcohol are present in a weight ratio of 95:5 to 5:95 respectively by total weight of the base fluid.

### Ready-to-use compositions

In some embodiments of the invention, the heat-transfer composition is a ready-to use composition wherein:
- the combined amount of water, alcohol, polyol amine and the compound according to formula (I) is more than 90 wt.%, preferably more than 92 wt.%, more preferably more than 93 wt.% by total weight of the ready-to-use composition;
- the polyol amine is within the range of 0.001 to 10 wt.%, preferably within the range of 0.01 to 5 wt.%, more preferably within the range of 0.01 to 2 wt.% by total weight of the ready-to-use composition;
- the compound according to formula (I) is within the range of 0.001 to 10 wt.%, preferably within the range of 0.01 to 5 wt.%, more preferably within the range of 0.01 to 2 wt.% by total weight of the ready-to-use composition.

In some embodiments of the invention, the heat-transfer composition is a ready-to-use composition wherein:
- the combined amount of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, is more than 90 wt.%, preferably more than 92 wt.%, more preferably more than 93 wt.% by total weight of the ready-to-use composition;
- the polyol amine is within the range of 0.001 to 10 wt.%, preferably within the range of 0.01 to 5 wt.%, more preferably within the range of 0.01 to 2 wt.% by total weight of the ready-to-use composition;
- the compound according to formula (I) is within the range of 0.001 to 10 wt.%, preferably within the range of 0.01 to 5 wt.%, more preferably within the range of 0.01 to 2 wt.% by total weight of the ready-to-use composition.

In some embodiments of the invention, the heat-transfer composition is a ready-to-use composition wherein:
- the combined amount of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, is more than 90 wt.%, preferably more than 92 wt.%, more preferably more than 93 wt.% by total weight of the ready-to-use composition;
- the polyol amine is within the range of 0.001 to 10 wt.%, preferably within the range of 0.01 to 5 wt.%, more preferably within the range of 0.01 to 2 wt.% by total weight of the ready-to-use composition;
- the compound according to formula (I) is within the range of 0.001 to 10 wt.%, preferably within the range of 0.01 to 5 wt.%, more preferably within the range of 0.01 to 2 wt.% by total weight of the ready-to-use composition;
- a corrosion inhibitor, preferably selected from the group consisting of triazoles, thiazoles, triazines, and diazoles, within the range of 0.001 to 10 wt.%, preferably within the range of 0.01 to 5 wt.%, more preferably within the range of 0.01 to 2 wt.% by total weight of the ready-to-use composition.

In some embodiments of the invention, the heat-transfer composition is a ready-to use composition wherein:
- the combined amount of water, alcohol, polyol amine and the compound according to formula (I) is more than 90 wt.%, preferably more than 92 wt.%, more preferably more than 93 wt.% by total weight of the ready-to-use composition;
- the polyol amine is within the range of 0.001 to 10 wt.%, preferably within the range of 0.01 to 5 wt.%, more preferably within the range of 0.01 to 2 wt.% by total weight of the ready-to-use composition;
- the compound according to formula (I) is within the range of 0.001 to 10 wt.%, preferably within the range of 0.01 to 5 wt.%, more preferably within the range of 0.01 to 2 wt.% by total weight of the ready-to-use composition

wherein the compound according to formula (I):
   wherein X¹ and X² are independently -H, -OH or -COOH;
   wherein Y¹ is -R^{a1}-(OCH₂CH₂)ₙ₁-R^{b1}-;
   wherein Y² is -R^{a2}-(OCH₂CH₂)ₙ₂-R^{b2}-;
   wherein R^{a1}, R^{a2}, R^{b1} and R^{b2} are independently a bond, a C₁-C₈ alkanediyl or a C₂-C₈ alkenediyl,
   wherein at least one of Y¹ and Y² comprises a carbon atom; and
wherein n1 and n2 are independently 0, 1, 2 .

### Concentrate

In some embodiments of the invention, the heat-transfer composition as described herein is provided in the form of a concentrate suitable to prepare the ready-to-use composition solely by addition of water and/or an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol and mixtures thereof; most preferably by addition of water. In highly preferred embodiments, the concentrate is suitable to prepare the heat-transfer composition solely by addition of water and/or alcohol; preferably solely by addition of water (i.e. no other ingredient needs to be added in order to prepare the heat-transfer composition described herein from the concentrate).

In some embodiments of the invention, the heat-transfer composition is concentrate composition wherein:
- the base fluid consists of an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, wherein the base fluid is more than 90 wt.%, preferably more than 92 wt.%, preferably more than 93 wt.%, preferably more than 95 wt.%, more preferably more than 98 wt.%, and most preferably more than 99 wt.% by total weight of the concentrate composition;
- the polyol amine is within the range of 0.001 to 10 wt.%, preferably within the range of 0.01 to 5 wt.%, more preferably within the range of 0.01 to 2 wt.% by total weight of the ready-to-use composition;
- the compound according to formula (I) is within the range of 0.001 to 10 wt.%, preferably within the range of 0.01 to 5 wt.%, more preferably within the range of 0.01 to 2 wt.% by total weight of the ready-to-use composition.

### Further Additives

As will be understood by the skilled person, based on teachings presented herein, the compositions in accordance with the invention may comprise one or more additives, as is conventional in the art. It is within the routine capabilities of one of ordinary skill in the art to determine how much of a certain additive can be added such that the conductivity of the resulting composition is in accordance with the invention.

In certain embodiments of the invention the composition provided herein further comprises one or more additives, preferably an additive selected from the group consisting of corrosion inhibitors, liquid dielectrics, antioxidants, anti-wear agents, detergents and antifoam agents. In preferred embodiments the composition of the invention further comprises one or more of said additives in an amount within the range of 0.001-10 wt.% (by total weight of the composition), preferably 0.01-5 wt.%, more preferably 002-3 wt.%.

In preferred embodiments the composition of the invention further comprises one or more additives selected from the group consisting of thiazoles, triazoles, polyolefins, polyalkylene oxides, silicon oils, mineral oils, silicates, aliphatic monocarboxylic acids, aliphatic dicarboxylic acids, aliphatic tricarboxylic acids, molybdates, nitrates, nitrites, phosphonates and phosphates. In preferred embodiments the composition of the invention further comprises one or more of said additives in an amount within the range of 0.001-10 wt.% (by total weight of the composition), preferably 0.01-5 wt.%.

In embodiments of the invention, the heat-transfer composition further comprises an anionic surfactants, such as anionic surfactants which are the salt of a compound represented by R-X; wherein X represents a sulfate group, a phosphate group, a sulfonate group, or a carboxylate group, preferably a sulfate group; and wherein R is selected from:
- branched or straight chain C₅-C₂₄ alkyl groups;
- branched or straight chain mono-unsaturated C₅-C₂₄ alkenyl groups;
- branched or straight chain poly-unsaturated C₅-C₂₄ alkenyl groups;
- alkylbenzene groups comprising a C₈-C₁₅ alkyl;
- alkenylbenzene groups comprising a C₈-C₁₅ alkenyl;
- alkylnaphthalene groups comprising a C₃-C₁₅ alkyl;
- alkenylnaphthalene groups comprising a C₃-C₁₅ alkenyl;
- alkylphenol groups comprising a C₈-C₁₅ alkyl; and
- alkenylphenol groups comprising a C₈-C₁₅ alkenyl.

In embodiments of the invention, the heat-transfer composition comprises said anionic surfactant in an amount of more than 0.001 wt.% (by total weight of the heat-transfer composition), preferably more than 0.005 wt.%, preferably more than 0.01 wt.% and/or less than 10 wt.%, preferably less than 5 wt.%, preferably less than 3 wt.%.

In embodiments of the invention, the heat-transfer composition as defined herein is provided, wherein the heat-transfer composition further comprises a corrosion inhibitors selected from the group consisting of aromatic carboxylates, aliphatic monocarboxylates, aliphatic dicarboxylates, aliphatic tricarboxylates, molybdates, and phosphates. As is understood by the skilled person, the carboxylates referred to herein are typically provided in the form of a free acid which is neutralized in-situ.

In embodiments of the invention, the heat-transfer composition further comprises an aliphatic monocarboxylate, preferably an aliphatic monocarboxylate selected from the group consisting of C₄-C₁₂ aliphatic monocarboxylates in an amount of more than 50 ppm (by weight), preferably more than 100 ppm, preferably more than 500 ppm and/or less than 5000 ppm, preferably less than 2500 ppm, preferably less than 1000 ppm. The amount of carboxylate referred to herein is calculated based on the weight of the carboxylate anion, exclusive of the weight of a cation.

In embodiments of the invention, the heat-transfer composition further comprises an aliphatic dicarboxylate, preferably an aliphatic dicarboxylate selected from the group consisting of C₆-C₁₆ aliphatic dicarboxylates, in an amount of more than 50 ppm (by weight), preferably more than 100 ppm, preferably more than 500 ppm and/or less than 5000 ppm, preferably less than 2500 ppm, preferably less than 1000 ppm. The amount of carboxylate referred to herein is calculated based on the weight of the carboxylate anion, exclusive of the weight of a cation.

In embodiments of the invention, the heat-transfer composition further comprises an aliphatic tricarboxylate, preferably an aliphatic tricarboxylate selected from the group consisting of C₇-C₁₈ aliphatic tricarboxylates, in an amount of more than 50 ppm (by weight), preferably more than 100 ppm, preferably more than 500 ppm and/or less than 5000 ppm, preferably less than 2500 ppm, preferably less than 1000 ppm. The amount of carboxylate referred to herein is calculated based on the weight of the carboxylate anion, exclusive of the weight of a cation.

In embodiments of the invention, the heat-transfer composition further comprises an aromatic carboxylate, preferably an aromatic carboxylate selected from the group consisting of benzoate, benzene-1,2-dicarboxylate, benzene-1,2,3-tricarboxylate, benzene-1,2,4-tricarboxylate, benzene-1,4 dicarboxylate and combinations thereof, in an amount of more than 50 ppm (by weight), preferably more than 100 ppm, preferably more than 500 ppm and/or less than 5000 ppm, preferably less than 2500 ppm, preferably less than 1000 ppm. The amount of carboxylate referred to herein is calculated based on the weight of the carboxylate anion, exclusive of the weight of a cation.

In embodiments of the invention, the heat-transfer composition further comprises a corrosion inhibitor which is a molybdate, preferably an inorganic molybdate in an amount of more than 1 ppm (by weight) molybdate, preferably more than 10 ppm, preferably more than 100 ppm molybdate and/or less than 10000 ppm, preferably less than 1000 ppm, preferably less than 500 ppm. If the molybdate is employed in the form of a salt, the amount of molybdate as used in this document refers to the amount of molybdate anion (i.e. exclusive of the weight of the cationic counterion).

In embodiments of the invention, the heat-transfer composition further comprises a corrosion inhibitor which is a phosphate, preferably an inorganic phosphate in an amount of more than 10 ppm (by weight) phosphate, preferably more than 250 ppm, preferably more than 1000 ppm phosphate and/or less than 10000 ppm, preferably less than 5000 ppm, preferably less than 2500 ppm. If the phosphate is employed in the form of a salt, the amount of phosphate as used herein refers to the amount of phosphate anion (i.e. exclusive of the weight of the cationic counterion).

In embodiments of the invention, the heat-transfer composition comprises a corrosion inhibitor which is a silicate in an amount more than 1 ppm Si (by weight), preferably more than 10 ppm Si, most preferably more than 100 ppm Si and/or less than 10000 ppm, preferably less than 1000 ppm, preferably less than 500 ppm. Said silicate corrosion inhibitor is preferably selected from the group consisting of inorganic silicates (such as sodium metasilicate), organic silicates (such as Si(R¹)ₙ(OR²)₄₋ₙ wherein R¹ and R² each independently are a C₁ to C₆ alkyl or phenyl, and wherein n is 0, 1, 2 or 3) or Silica (SiO₂) nanoparticles (such as silica nanoparticles having a volume median particle size (Dv50) within the range of 10-200 nm).

In embodiments of the invention, the heat-transfer composition comprises a corrosion inhibitor which is a non-ionic corrosion inhibitor. Examples of suitable non-ionic corrosion inhibitors are triazoles, thiazoles, triazines, diazoles, non-ionic polymers, silicate esters (such as Si(OR)4, wherein R is a C₁ to C₄ alkyl group), organic silicates (such as Si(R¹)ₙ(OR²)₄₋ₙ wherein R¹ and R² each independently are a C₁ to C₆ alkyl or phenyl, and wherein n is 0, 1, 2 or 3), trimethylsilyl containing molecules (such as N,O-bis(trimethylsilyl)acetamide, N trimethylsilylacetamide), alcohols containing an alkene or alkyne group (such as 3-butene-1-ol, 4 pentene-1-ol, 2,5-dimethyl-3-hexyne-2,5-diol) and combinations thereof, wherein the non-ionic polymers are preferably selected from the group consisting of polyvinylpyrrolidones, polyvinylalcohols, polyalkyleneoxides, polysiloxanes, C₁-C₁₈ alkyl or alkenyl ethers of polyalkyleneoxides, C₁-C₁₈ alkyl or alkenyl esters of polyalkyleneoxides, alkoxylated C₁-C₁₈ alkyl or alkenyl amines, polyvinylacetates, copolymers thereof and combinations thereof.

The corrosion inhibitor is preferably selected from triazoles, thiazoles, triazines, diazoles and combinations thereof.

In preferred embodiments of the invention, the corrosion inhibitor is selected from 1,2,3 triazoles, 1,2,4-triazoles, and combinations thereof. In preferred embodiments of the invention, the corrosion inhibitor is selected from 1,2,4-triazole, 4H-1,2,4-triazole, 4-amino-1,2,4-triazole, 3-amino-1,2,4-triazole, 1,2,4-triazole-3-thiol, 3-amino-1,2,4 triazole-5-thiol, 3,5-diamino-1,2,4-triazole, 1H-1,2,3-triazole, benzotriazole, 2-mercaptobenzothiazole, tolyltriazole, 2-[2-hydroxyethyl-[(4-methylbenzotriazol-1-yl)methyl]amino]ethanol, 2-[2-hydroxyethyl [(benzotriazolyl)methyl]amino]ethanol, (2-Benzothiazolylthio)acetic benzotriazol-1-yl)methyl]imino]bisethanol, acid, 2,2'-[[(Methyl-1H N,N-bis(2-ethylhexyl)-methyl-1H-Benzotriazole-1 methanamine, and combinations thereof, more preferably selected from benzotriazole, tolyltriazole, 2 mercaptobenzothiazole, and combinations thereof.

In embodiments of the invention, the heat-transfer composition further comprises a nitrate, preferably an inorganic nitrate in an amount of more than 1 ppm (by total weight of the heat transfer composition) nitrate, preferably more than 10 ppm, preferably more than 100 ppm nitrate and/or less than 10000 ppm, preferably less than 1000 ppm, preferably less than 500 ppm. If the nitrate is employed in the form of a salt, the amount of nitrate as used in this document refers to the amount of nitrate anion (i.e. exclusive of the weight of the cationic counterion).

In embodiments of the invention, the heat-transfer composition further comprises a nitrite, preferably an inorganic nitrite in an amount of more than 1 ppm (by total weight of the heat transfer composition) nitrite, preferably more than 10 ppm, preferably more than 100 ppm nitrite and/or less than 10000 ppm, preferably less than 1000 ppm, preferably less than 500 ppm. If the nitrite is employed in the form of a salt, the amount of nitrite as used in this document refers to the amount of nitrite anion (i.e exclusive of the weight of the cationic counterion).

In embodiments of the invention, the heat-transfer composition further comprises a phosphonate, preferably an inorganic phosphonate in an amount of more than 10 ppm (by total weight of the heat transfer composition) phosphonate, preferably more than 250 ppm, preferably more than 1000 ppm phosphonate and/or less than 10000 ppm, preferably less than 5000 ppm, preferably less than 2500 ppm. If the phosphonate is employed in the form of a salt, the amount of phosphonate as used in this document refers to the amount of phosphonate anion (i.e. exclusive of the weight of the cationic counterion).

The present inventors have found that the inclusion of certain further additives in the heat transfer composition of the present invention may particularly improve one or more of the composition's properties when used as a heat-transfer composition, in particular when considering corrosion inhibition and the capacity to maintain a low electrical conductivity upon ageing in the presence of metals, at increased temperatures, while maintaining the same performance. Such particularly preferred additives, referred to herein as "enhancing additives" include non-ionic polymers, amines, aromatic alcohols, dioxo aromatic compound and non-ionic surfactants. These are described in more detail in the following paragraphs.

In preferred embodiments of the invention the heat-transfer composition further comprises a non-ionic polymer selected from the group consisting of polyvinylpyrrolidones, polyvinylalcohols, polyalkyleneoxides, polysiloxanes, C₁-C₁₈ alkyl or alkenyl ethers of polyalkyleneoxides, C₁-C₁₈ alkyl or alkenyl esters of polyalkyleneoxides, alkoxylated C₁-C₁₈ alkyl or alkenyl amines, polyvinylacetates, copolymers thereof and combinations thereof, preferably a non-ionic polymer selected from polyvinylpyrrolidones. The non-ionic polymer preferably has a weight average molecular weight Mw in the range of 100 to 5,000,000 g/mol, preferably 500 to 2,500,000 g/mol. The polyalkelyne oxides are preferably selected from polyethylene oxides, polypropylene oxides, polybutyleneoxides, and copolymers thereof. The polyvinylpyrrolidone may be selected from polyvinylpyrrolidone homopolymer and polyvinylpyrrolidone copolymers, preferably polyvinylpyrrolidone homopolymer. Examples of suitable polyvinylpyrrolidone copolymers include polymers of N-vinylpyrrolidone in combination with at least one other monomer selected from styrene, vinyl acetate, ethylene, propylene, tetrafluoroethylene, methyl methacrylate, vinyl chloride and ethylene oxide. In such embodiments the percentage of N vinylpyrrolidone monomers is at least 10%, more preferably at least 25%, such as at least 50%, at least 60%, at least 70%, at least 80%, at least 90%, or at least 95%, based on the total number of monomers in the polyvinylpyrrolidone copolymer. Preferred polyvinylpyrrolidone copolymers that can be applied in the heat-transfer composition include copolymers of N-vinylpyrrolidone and vinyl acetate, wherein the percentage of N-vinylpyrrolidone monomers is at least 25%, based on the total number of monomers in the polyvinylpyrrolidone copolymer, hydrolysed forms of copolymers of N-vinylpyrrolidone and vinyl acetate, wherein the percentage of N-vinylpyrrolidone monomers is at least 10%, based on the total number of monomers in the polyvinylpyrrolidone copolymer and copolymers of N-vinylpyrrolidone and N-vinylcaprolactam, wherein the percentage of N-vinylpyrrolidone monomers is at least 40%, based on the total number of monomers in the polyvinylpyrrolidone copolymer. The polyvinylpyrrolidone, preferably the polyvinylpyrrolidone homopolymer, preferably has a weight average molecular weight Mw in the range of 100 to 5,000,000 g/mol, preferably 500 to 2,500,000 g/mol. As appreciated by the skilled person, the weight average molecular is the weight fraction of molecules in a polymer sample and provides the average of the molecular masses of the individual macromolecules in the polymer sample. The weight average molecular weight as defined herein is determined using the following equation: M_{w}=(ΣNᵢMᵢ²/) (ΣNᵢMᵢ ) . The skilled person knows the different techniques to determine the weight average molecular weight of polymers of varying chain lengths. The weight average molecular weight and the corresponding method of measurement are typically indicated on the product data sheet of the considered polymers. In particular embodiments of the invention, the polyvinylpyrrolidone, preferably the polyvinylpyrrolidone homopolymer, has a weight average molecular weight in the range of 3,000 to 2,500,000 g/mol, preferably in the range of 5,000 to 2,250,000 g/mol, more preferably in the range of 7,500 to 2,00,000 g/mol, even more preferably in the range of 8,000 to 1,800,000 g/mol. polyvinylpyrrolidone that may be suitable used as additive can be purchased from commercial supplies such as BASF, Sigma-Aldrich or Nippon Shokubai. Examples of commercially available polyvinylpyrrolidone are Luvitec K17 (M_{W} = 9,000 g/mol), Luvitec K30 (Mw= 50,000 g/mol), Luvitec K90 (Mw = 1,400,000 g/mol) and PVP K30. In embodiments of the invention, the heat-transfer composition comprises as a further additive the non-ionic polymer in an amount of more than 0.001 wt.% (by total weight of the heat transfer composition), preferably more than 0.005 wt.%, preferably more than 0.01 wt.% and/or less than 10 wt.%, preferably less than 5 wt.%, preferably less than 3 wt.%.

In preferred embodiments of the invention the heat-transfer composition further comprises an amine. The amine is preferably selected from molecules consisting of the atoms C, N, H and optionally O, comprising 1 to 10 C atoms, comprising one or more amine functional groups and optionally comprising one or more hydroxyl or ether functional groups, and preferably wherein the amine is free of other functional groups than the one or more amine functional groups and optionally one or more hydroxyl or ether functional groups. In preferred embodiments the amine is selected from the group consisting of methylamine, dimethylamine, trimethylamine, ethylamine, isopropylamine, tributylamine, tris(hydroxymethyl)aminomethane, triethylamine, 2-dimethylaminoethanol, 2-diethylaminoethanol, monoethanolamine, 2-amino-2-methyl-1-propanol, ethoxylated caprylamine, diisopropylamine, 2-dibutylaminoethanol, 2-dipropylaminoethanol, triethanolamine, tri(isopropanol)amine, ethylenediamine, piperadine, morpholine, pyrrolidine, piperazine, diisopropyl-methylamine, 1,4-diazabicyclo[2.2.2]octane, quinuclidine, ethanolamine, diethanolamine, benzylamine, cyclohexamine, hexylamine, dicyclohexylamine, isobutanolamine, dihydroxyethylamine, 3- methoxypropylamine, p,p-dioctylphenylamine, monooctyldiphenylamine, phenyl-1-naphthylamine, phenyl-2-naphthylamine, alkylphenyl-1-naphthatalamines, alkyl-phenyl-2 naphthal-amines, alkoxylated C1-C22 hydrocarbyl amines (in particular ethoxylated caprylamine such as 2-EO-caprylamine) and combinations thereof. In embodiments of the invention, the heat-transfer composition comprises as a further additive the amine in an amount of more than 0.001 wt.% (by total weight of the heat transfer composition), preferably more than 0.005 wt.%, preferably more than 0.01 wt.% and/or less than 10 wt.%, preferably less than 5 wt.%, preferably less than 3 wt.%.

In embodiments of the invention the heat-transfer composition described herein further comprises an aromatic alcohol selected from phenols, pyrogallols, gallic acid, gallate esters and combinations thereof. The phenol is preferably selected from phenol optionally having a 0, 1, 2 or 3 substituents independently selected from amino, C1-C6 alkyl. Examples of suitable and preferred phenols include 2-aminophenol, 4-aminophenol, 2-Amino-4-methylphenol, 2,6 di-t-butyl methylphenol, 4,4'-methylene-bis(2,6-di-t butylphenol), and 4-amino-3-methylphenol. Examples of suitable and preferred gallate esters include C1-C12 alkyl esters of gallate. In embodiments of the invention, the heat-transfer composition comprises as a further additive the aromatic alcohol in an amount of more than 0.001 wt.% (by total weight of the heat transfer composition), preferably more than 0.005 wt.%, preferably more than 0.01 wt.% and/or less than 10 wt.%, preferably less than 5 wt.%, preferably less than 3 wt.%.

In embodiments of the invention the heat-transfer composition further comprises a dioxo-aromatic compound selected from benzoquinones, napthoquinones, hydroquinones and catechols. The dioxo aromatic compound is preferably selected from 1,4-benzoquinone, 1,2-benzoquinone, 1,2 napthoquinone, 1,4-napthoquinone, 1,4-dihydroxybenzene and 1,2-dihydroxybenzene, optionally having a 0, 1, or 2 substituents independently selected from amino, C₁-C₆ alkyl, sulphonic acid. In embodiments of the invention, the heat-transfer composition comprises as a further additive the dioxo-aromatic compound in an amount of more than 0.001 wt.% (by total weight of the heat transfer composition), preferably more than 0.005 wt.%, preferably more than 0.01 wt.% and/or less than 10 wt.%, preferably less than 5 wt.%, preferably less than 3 wt.%.

In embodiments of the invention, the heat-transfer composition further comprises a secondary antioxidant selected from thiols, thioethers, and thioesters, such as those selected from methyl mercaptan, ethyl mercaptan, n-propyl mercaptan, 2-propenethiol, butanethiol, tert-butyl mercaptan, thiophenol, thioacetic acid, dimercaptosuccinic acid, glutathione, cysteine, methyl thionobenzoate, dimethyl sulfide, methyl phenyl sulfide, 4-ethylthio-2-methylpent-2-ene, dimethyl sulfide, diethyl sulfide, diphenyl sulfide, phenyl 4-piperidyl sulfide, and thiodiglycol.

In embodiments of the invention the heat-transfer composition further comprises a non-ionic surfactant. The non-ionic surfactant is preferably selected from the group consisting of:
- fatty acid esters, such as sorbitan fatty acid esters;
- polyalkylene glycols;
- polyalkylene glycol esters;
- copolymers and block copolymers of ethylene oxide and propylene oxide;
- polyoxyalkylene derivatives of sorbitan fatty acid esters; and
- alkoxylated alcohol ethers.

In embodiments of the invention, the heat-transfer composition comprises as a further additive the non-ionic surfactant in an amount of more than 0.001 wt.% (by total weight of the heat transfer composition), preferably more than 0.005 wt.%, preferably more than 0.01 wt.% and/or less than 10 wt.%, preferably less than 5 wt.%, preferably less than 3 wt.%.

In some embodiments of the invention, the heat-transfer composition comprises a polymeric dye. As will be understood by the person skilled in the art, utilising such large polymeric dyes minimizes interaction with the ion-exchange resin. Commercially available examples of suitable dyes include Liquitint^{®} Red ST or other similar polymeric colorants from Milliken Chemical of Spartanburg, S.C., USA, or colorants (e.g., Liquitint^{®} Blue RE) from Chromatech of Canton, Mich., USA. Other illustrative colorants include the following: Liquitint Red ST, Liquitint Blue RE, Liquitint Red XC, Liquitint Patent Blue, Liquitint Bright yellow, Liquitint Bright orange, Liquitint Royal Blue, Liquitint Blue N-6, Liquitint Bright Blue, Liquitint Supra Blue, Liquitint Blue HP, Liquitint Blue DB, Liquitint Blue II, Liquitint Exp. Yellow 8614-6, Liquitint Yellow BL, Liquitint Yellow II, Liquitint Sunbeam Yellow, Liquitint Supra yellow, Liquitint Green HMC, Liquitint violet, Liquitint Red BL, Liquitint Red RL, Liquitint Cherry Red, Liquitint Red II, Liquitint Teal, Liquitint Yellow LP, Liquitint Violet LS, Liquitint Crimson, Liquitint Aquamarine, Liquitint Green HMC, Liquitint Red HN, Liquitint Red ST, as well as combinations thereof. In one exemplary embodiment, the dye will be at least one of Liquitint Red, Liquitint Yellow, Liquitint Patent Blue or combinations thereof.

### Method for forming the heat-transfer composition

In a different aspect of the invention, there is provided a method of exchanging heat comprising:
a. providing a heat-transfer composition in accordance with the heat-transfer composition as described herein elsewhere;
b. generating heat in a system selected from a combustion engine, a solar system, a fuel cell, an electrical motor, a generator, a battery, a battery electric vehicle, or electronic equipment, data centres, preferably in a combustion engine;
c. contacting the composition of step (a) with the system of step (b);
d. transferring heat from the system to the composition;
e. passing the composition through a heat exchanger; and
f. transferring heat away from the composition.

The electrical system is preferably an electrical system selected from the group consisting of a solar system, a fuel cell, an electrical motor, a generator, a battery, a battery electric vehicle, DC/DC converters, DC/AC converters, a telephone transmission state, power electronics, a radio and television broadcast station, a relay station, an electrical heating or cooling device, data centres, preferably a fuel cell, battery or power electronics.

In highly preferred embodiments of the invention, the electrical conductivity of the heat-transfer composition is maintained at less than less than 500 µS/cm,preferably less than 300 µS/cm,preferably less than 250 µS/cm, preferably less than 200 µS/cm, preferably less than 150, preferably less than 100 µS/cm, preferably less than 50 µS/cm,more preferably less than 25 µS/cm,more preferably less than 10 µS/cm,most preferably less than 5 µS/cm throughout the method.

The heat-transfer composition used in the method is preferably as has been described herein in the context of the invention. Thus, the embodiments characterising the heat-transfer composition apply *mutatis mutandis* to the method of the invention.

The heat-transfer composition of step (a) preferably has a pH within the range of 3-12, preferably 4-12, preferably 5-10, more preferably 6-10, more preferably 6.5-9.5, more preferably between 7-9. In preferred embodiments, after any one of steps (b) to (f), the pH of the heat-transfer composition remains within the range of 3-12, preferably 4-12, preferably 5-10, more preferably 6-10, more preferably 6.5-9.5 more preferably between 7-9.

### Uses of the invention

In another aspect of the invention, there is provided the use of a compound according to formula (I): 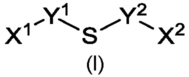
wherein X¹ and X² are independently -H, -OH, -CHO or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2}, R^{b1} and R^{b2} are independently a bond, a C₁-C₈ alkanediyl or a C₂-C₈ alkenediyl,
wherein at least one of Y¹ and Y² comprises a carbon atom; and
wherein n1 and n2 are independently 0, 1, 2, 3, 4 or 5
for:
- prolonging the corrosion inhibiting properties of a heat-transfer composition comprising a corrosion inhibitor; and/or
- preventing the coloration or reducing the formation of a coloured heat-transfer composition, especially at temperatures greater than 100 °C, more preferably at temperatures greater than 120 °C; and/or
- extending the service life of a heat-transfer composition by reducing, postponing or avoiding the formation of electrically conductive acids such as glycolates; and/or
- preventing a pH change of a heat-transfer composition, especially at temperatures greater than 100 °C, more preferably at temperatures greater than 120 °C; and/or
- improving the thermal stability of a heat-transfer composition.

In another aspect of the invention, there is provided the use of a heat-transfer composition comprising:
- a base fluid comprising an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof;
- a polyol amine with a molecular weight less than 500 g/mol;
- a compound according to formula (I): 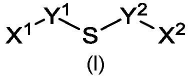
   wherein X¹ and X² are independently -H, -OH, -CHO or -COOH;
   wherein Y¹ is -R^{a1}-(OCH₂CH₂)ₙ₁-R^{b1}-;
   wherein Y² is -R^{a2}-(OCH₂CH₂)ₙ₂-R^{b2}-;
   wherein R^{a1}, R^{a2}, R^{b1} and R^{b2} are independently a bond, a C₁-C₈ alkanediyl or a C₂-C₈ alkenediyl,
   wherein at least one of Y¹ and Y² comprises a carbon atom; and
   wherein n1 and n2 are independently 0, 1, 2, 3, 4 or 5
   for:
   - prolonging the corrosion inhibiting properties of a heat-transfer composition comprising a corrosion inhibitor; and/or
   - preventing the coloration or reducing the formation of a coloured heat-transfer composition, especially at temperatures greater than 100 °C, more preferably at temperatures greater than 120 °C; and/or
   - extending the service life of a heat-transfer composition by reducing, postponing or avoiding the formation of electrically conductive acids such as glycolates; and/or
   - preventing a pH change of a heat-transfer composition, especially at temperatures greater than 100 °C, more preferably at temperatures greater than 120 °C; and/or
   - improving the thermal stability of a heat-transfer composition.

### Examples

Electrical conductivity was measured in accordance with ASTM D1125 23 with a Mettler-Toledo SevenExcellence Cond meter S700-Std-Kit electrical conductivity meter equipped with a SevenExcellence Cond meter S700-Std-Kit.

The analysis of anions (e.g. glycolate, formate) in the coolant was performed using ion chromatography in accordance with ASTM D5827-22 using a Thermo-Scientific Dionex ICS 6000.

The analysis of organic corrosion inhibitors (e.g. tolyltriazole) was performed using reverse phase HPLC on a Shimadzu Prominence system employing an Agilent Zorbax Eclipse Plus C18 column with UV detection.

Hot Surface Corrosion Testing (HSCT) was performed in accordance with ASTM D4340, with modifications to suit the experimental requirements. Specifically, the method was adapted to use deionized water in place of corrosive water, and the test conditions were adjusted to the volumes and temperatures detailed in the examples below.

### Example 1

Heat-transfer composition were prepared as is shown in Table 1.

**Table 1: Heat-Transfer Compositions**

| **Sample** | **Comparative Ex. 1** | **Comparative Ex. 2** | **Comparative Ex. 3** | **Ex. 1** |
|---|---|---|---|---|
| Monoethylene glycol (wt.%) | 93.277 | 92.893 | 92.62 | 92.233 |
| Tolyltriazole (wt.%) | 0.090 | 0.090 | 0.090 | 0.090 |
| Organic acids (wt.%) | 3.542 | 3.542 | 3.542 | 3.542 |
| Water (wt.%) | 1.92 | 1.909 | 1.92 | 1.1742 |
| Antifoam Agent (wt.%) | 0.060 | 0.060 | 0.060 | 0.060 |
| Sodium Hydroxide (wt.%) | 1.11 | 1.099 | 1.11 | 1.099 |
| Thiodiqlvcol (wt.%) | - | 0.4057 | - | 0.406 |
| Triethanolamine 85 v/v% (wt.%) | - | - | 0.660 | 0.660 |

100 mL of the 50 v/v% composition in water as outlined in Table 1 was adjusted to a pH of 8.5 and subjected to Hot Surface Corrosion Testing (HSCT) at 145 °C for 7 days using an aluminium coupon.

**Table 2: Results of HSCT**

| **Sample** | **Comparative Ex. 1** | | **Comparative Ex. 2** | | **Comparative Ex. 3** | | **Ex. 1** | |
|---|---|---|---|---|---|---|---|---|
| | Before HCST | After HCST | Before HCST | After HCST | Before HCST | After HCST | Before HCST | After HCST |
| pH | 8.5 | 6.88 | 8.49 | 7.3 | 8.53 | 6.52 | 8.67 | 8.37 |
| Glycolate (ppm) | 5 | 260 | 3 | 111 | 5 | 835 | 3 | 200 |
| Formate (ppm) | 5 | 19 | 3 | 24 | 2 | 308 | 4 | 48 |
| Sulfate (ppm) | - | - | - | 11 | - | - | - | 7 |
| Oxalate (ppm) | - | 3 | - | 4 | - | 11 | - | 4 |
| Corrosion rate (mg/cm²/week) | - | -0.2 | - | -0.3 | - | -0.3 | - | -0.1 |
| Colour | Clear | Light yellow | Clear | Light yellow | Clear | Dark Brown | Clear | Light yellow |

Table 2 illustrates the heat-transfer composition properties prior to and after HCST testing. The addition of triethanolamine as a known coolant buffer causes unwanted discoloration of the antifreeze and accelerates the formation of breakdown acids from the glycol which negatively impacts the pH stability and/or the heat stability of the buffer capacity at elevated temperatures. The inclusion of thiodiglycol enhances buffer and pH stability, while also minimizing coolant discoloration.

### Examples 2 to 4

Heat-transfer compositions were prepared as is shown in Table 3.

**Table 3: Heat-Transfer Compositions**

| **Sample** | **Ex.2** | **Ex. 3** | **Ex. 4** |
|---|---|---|---|
| Monoethylene glycol (wt.%) | 91.6364 | 91.3442 | 91.9917 |
| Tolyltriazole (wt.%) | 0.2 | 0.2 | 0.2 |
| Organic acids (wt.%) | 3.492 | 3.492 | 3.492 |
| Water (wt.%) | 2.118 | 2.4184 | 2.4184 |
| Antifoam Agent (wt.%) | 0.06 | 0.06 | 0.06 |
| Sodium Hydroxide (wt.%) | 0.9796 | 1.2796 | 1.2796 |
| Triethanolamine 85 v/v% (wt.%) | 0.7021 | 0.7021 | 0.7021 |
| Thiodiglycol (wt.%) | 0.8115 | - | - |
| Thiodiglycolic acid | - | 0.5037 | - |
| 2-(ethylthio)ethanol | - | - | 0.3562 |

100 mL of the 50 v/v% composition in water as outlined in Table 3 was adjusted to a pH of 8.5 and subjected to Hot Surface Corrosion Testing (HSCT) at 145 °C for 7 days using an aluminium coupon.

**Table 4: Results of HSCT**

| **Sample** | **Ex 2.** | | **Ex 3.** | | **Ex 4.** | |
|---|---|---|---|---|---|---|
| | Before HCST | After HCST | Before HCST | After HCST | Before HCST | After HCST |
| pH | 8.55 | 8.49 | 8.55 | 7.94 | 8.56 | 8.48 |
| Glycolate (ppm) | 4 | 223 | - | 330 | - | 304 |
| Formate (ppm) | 3 | 66 | - | 613 | - | 71 |
| Sulfate (ppm) | 2 | 7 | - | 529 | 1 | 5 |
| Oxalate (ppm) | - | 5 | - | 29 | 1 | 3 |
| Corrosion rate (mg/cm²/week) | - | -0.2 | - | -0.1 | - | -0.2 |
| Colour | Clear | Yellow | Clear | Yellow | Clear | Light Yellow |

As can be observed from Table 4, the improved buffer stability and reduced discoloration can be observed with the inclusion of a compound according to formula (I).

### Examples 4 to 7

Heat-transfer compositions were prepared as is shown in Table 3.

**Table 5: Heat-Transfer Compositions**

| **Sample** | **Comparative Ex.4** | **Ex.5** | **Comparative Ex. 5** | **Ex. 6** | **Comparative Ex. 6** | **Ex. 7** |
|---|---|---|---|---|---|---|
| Monoethylene glycol (wt.%) | 92.5419 | 92.1362 | 92.8426 | 92.4369 | 92.6390 | 92.2333 |
| Organic acids (wt.%) | 3.542 | 3.542 | 3.542 | 3.542 | 3.542 | 3.542 |
| Sodium hydroxide 50% (wt.%) | 2.1500 | 2.1500 | 2.1500 | 2.1500 | 2.1500 | 2.1500 |
| Tolyltriazole (wt.%) | 0.0900 | 0.0900 | 0.0900 | 0.0900 | 0.0900 | 0.0900 |
| Water (wt.%) | 0.7350 | 0.7350 | 0.7350 | 0.7350 | 0.7350 | 0.7350 |
| Antifoam agent (wt.%) | 0.0600 | 0.0600 | 0.0600 | 0.0600 | 0.0600 | 0.0600 |
| Sodium hydroxide 5N (wt.%) | 0.1240 | 0.1240 | 0.1240 | 0.1240 | 0.1240 | 0.1240 |
| triethanolamine 85% (wt.%) | - | - | - | - | 0.6600 | 0.6600 |
| triisopropanolamine 95% (wt.%) | 0.7571 | 0.7571 | - | - | - | - |
| Tris (wt.%) | - | - | 0.4564 | 0.4564 | - | - |
| Thiodiglycol (wt.%) | - | 0.4057 | - | 0.4057 | - | 0.4057 |

100 mL of the 50 v/v% composition in water as outlined in Table 5 was adjusted to a pH of 8.5 and subjected to Hot Surface Corrosion Testing (HSCT) at 145 °C for 7 days using an aluminium coupon.

**Table 6: Results of HSCT**

| | **Comparative Ex.4** | | **Ex.5** | | **Comparative Ex. 5** | | **Ex. 6** | | **Comparative Ex. 6** | | **Ex. 7** | |
|---|---|---|---|---|---|---|---|---|---|---|---|---|
| | Before HSCT | After HSC T | Before HSCT | After HSC T | Before HSCT | After HSC T | Before HSCT | After HSCT | Before HSCT | After HSC T | Before HSCT | After HSC T |
| pH | 8.57 | 6.22 | 8.57 | 8.53 | 8.51 | 6.3 | 8.51 | 8.7 | 8.55 | 6.21 | 8.53 | 8.33 |
| Glycolate (ppm) | 3 | 1031 | 3 | 106 | 3 | 263 | 3 | 16 | 3 | 1029 | 3 | 241 |
| Formate (ppm) | - | 333 | - | 33 | - | 366 | - | 27 | 2 | 310 | 1 | 54 |
| Sulfate (ppm) | - | - | - | 4 | - | - | - | 5 | - | 2 | - | 4 |
| Oxalate (ppm) | - | 12 | - | 3 | - | 7 | - | 3 | - | 12 | - | |
| Corrosion rate (mg/cm²/we ek) | - | -0.3 | - | -0.3 | - | - | - | -0.3 | - | 0.2 | - | 0.3 |
| HSCT (145 °C) discolourati on | Colourle ss | Dark Brow n | Colourle ss | Light Yello w | Colourle ss | Light brow n, oran ge | Colourle ss | Colourle ss to slightly yellow | Colourle ss | Dark Brow n | Colourle ss | Light Yello w |

As can be observed from Table 6, the improved buffer and reduced discoloration can be observed with the inclusion of a polyol amine in combination with a compound according to formula (I).

### Examples 8 to 9

In Example 8 a commercial Battery Electric Vehicle (BEV) coolant was utilised without a compound according to formula (I). In Example 9, a commercial BEV coolant was utilised with a compound according to formula (I).

**Table 7: Heat-Transfer Compositions**

| **Sample** | **Ex. 8** | **Ex. 9** |
|---|---|---|
| Commercial BEV coolant (wt.%) | 99.4479 | 99.4479 |
| Triethanolamine 85% v/v in water (wt.%) | 0.5521 | 0.5547 |
| Thiodiglycol (wt.%) | - | 0.0803 |

50 mL of the 50 v/v% composition in water as outlined in Table 7 was adjusted to a pH of 8.5 and subjected to Hot Surface Corrosion Testing (HSCT) at 135 °C for 7 days using an aluminium coupon.

**Table 8: Results of HSCT**

| **Sample** | **Ex. 8** | | **Ex. 9** | |
|---|---|---|---|---|
| | Before HSCT | After HSCT | Before HSCT | After HSCT |
| pH | 8.2 | 4.04 | 8.1 | 7.8 |
| eCond 25 °C | 94.4 | 244.58 | 92.6 | 132.9 |
| Glvcolate (ppm) | 3 | 1133 | 5 | 123 |
| Formate (ppm) | 2 | 258 | 1 | 13 |
| Sulfate (ppm) | - | 2 | - | - |
| Oxalate (ppm) | - | 21 | - | - |
| Al (ppmv) | - | 22 | - | 1.2 |
| Ca (ppmv) | - | 7.2 | - | 1.3 |
| Mg (ppmv) | - | 8.9 | - | 1 |
| Si (ppmv) | - | 17 | - | 4.5 |
| Sr (ppmv) | 24 | 31 | 26 | 25 |
| TTZ | 0.023 | 0.019 | - | 0.024 |
| Appearance | Blue clear | Discoloration to green and further to yellow-grey | Blue clear | Blue clear, some deposit on coupon |

Table 8 illustrates that the presence of a compound according to formula (I) results in an increase in electrical conductivity of 43% and no significant discoloration. However, in the absence of a compound according to formula (I), the electrical conductivity increased by 159% with significant discoloration.

## Claims

1. A heat-transfer composition comprising:
• a base fluid comprising an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof;
• a polyol amine with a molecular weight less than 500 g/mol;
• a compound according to formula (I): 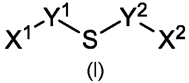
wherein X¹ and X² are independently -H, -OH, -CHO or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2}, R^{b1} and R^{b2} are independently a bond, a C₁-C₈ alkanediyl or a C₂-C₈ alkenediyl,
wherein at least one of Y¹ and Y² comprises a carbon atom; and
wherein n1 and n2 are independently 0, 1, 2, 3, 4 or 5.

2. The heat-transfer composition according to claim 1, wherein the molar ratio of polyol amine to the compound according to formula (I) is within the range of 0.5:1 to 20:1, preferably within the range of 0.8:1 to 10:1 respectively.

3. The heat-transfer composition according to claim 1 or 2, wherein the polyol amine is selected from the group consisting of triethanolamine (TEOA), triisopropanolamine (TIPA) and/or tris(hydroxymethyl)aminomethane (TRIS).

4. The heat-transfer composition according to any one of the preceding claims, comprising the compound according to formula (I):
wherein X¹ and X² are independently -H, -OH or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2}, R^{b1} and R^{b2} are independently a bond, a C₁-C₈ alkanediyl or a C₂-C₈ alkenediyl,
wherein at least one of Y¹ and Y² comprises a carbon atom; and
wherein n1 and n2 are independently 0, 1, 2.

5. The heat-transfer composition according to any one of the preceding claims, wherein the compound according to formula (I) comprises a molecular weight of less than 1000 g/mol, preferably less than 500 g/mol and most preferably less than 300 g/mol.

6. The heat-transfer composition according to any one of the preceding claims, wherein the compound according to formula (I) is selected from the group consisting of thiodiglycol, thiodiglycolic acid, 3,3'-thiodipropionic acid, 2-(ethylthio) ethanol.

7. The heat-transfer composition according to any one of the preceding claims, wherein the pH of the heat-transfer composition is between 6 and 10, preferably between 6.5 and 9.5, more preferably between 7 and 9.

8. The heat-transfer composition according to any one of the preceding claims, wherein the electrical conductivity at 25 °C is between 500 to 5000 µS/cm,preferably between 600 to 4000 µS/cm,more preferably between 700 to 3000 µS/cm.

9. The heat-transfer composition according to any one of claims 1 to 7, wherein the electrical conductivity at 25 °C is less than 200 µS/cm,preferably less than 150 µS/cm,preferably less than 100 µS/cm and most preferably less than 70 µS/cm.

10. The heat-transfer composition according to any one of the preceding claims, wherein the base fluid comprises, preferably consists, of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol and mixtures thereof.

11. The heat-transfer composition according to any one of the preceding claims, further comprising one or more additives selected from the groups consisting of corrosion inhibitors, antioxidants, antiwear agents, surfactants, scale inhibitors, antifoam agents in an amount within the range of 0.001-10 wt.%, preferably within the range of 0.01-5 wt.% by total weight of the composition.

12. The heat-transfer composition according to any one of claims 1 to 11, which is a ready-to-use composition wherein:
• the combined amount of water, alcohol, polyol amine and the compound according to formula (I) is more than 90 wt.%, preferably more than 92 wt.%, more preferably more than 93 wt.% by total weight of the ready-to-use composition;
• the polyol amine is within the range of 0.001 to 10 wt.%, preferably within the range of 0.01 to 5 wt.%, more preferably within the range of 0.01 to 2 wt.% by total weight of the ready-to-use composition.

13. The heat-transfer composition according to any one of claims 1 to 11, which is a concentrate suitable to prepare the ready-to-use composition according to claim 12 solely by addition of water and/or an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol and mixtures thereof.

14. A method of exchanging heat, comprising:
a. providing a heat-transfer composition in accordance with any one of claims 1 to 11, or the ready-to-use composition according to claim 12;
b. generating heat in a system selected from a combustion engine, a solar system, a fuel cell, an electrical motor, a generator, a battery, a battery electric vehicle, or electronic equipment, preferably in a combustion engine;
c. contacting the composition of step (a) with the system of step (b);
d. transferring heat from the system to the composition;
e. passing the composition through a heat exchanger; and
f. transferring heat away from the composition.

15. Use of a compound according to formula (I): 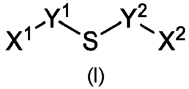
wherein X¹ and X² are independently -H, -OH, -CHO or -COOH;
wherein Y¹ is -R^{a1}-(OCH₂CH₂)ₙ₁-R^{b1}-;
wherein Y² is -R^{a2}-(OCH₂CH₂)ₙ₂-R^{b2}-;
wherein R^{a1}, R^{a2}, R^{b1} and R^{b2} are independently a bond, a C₁-C₈ alkanediyl or a C₂-C₈ alkenediyl,
wherein at least one of Y¹ and Y² comprises a carbon atom; and
wherein n1 and n2 are independently 0, 1, 2, 3, 4 or 5
for:
• prolonging the corrosion inhibiting properties of a heat-transfer composition comprising a corrosion inhibitor; and/or
• preventing the coloration or reducing the formation of a coloured heat-transfer composition, especially at temperatures greater than 100 °C, more preferably at temperatures greater than 120 °C; and/or
• extending the service life of a heat-transfer composition by reducing, postponing or avoiding the formation of electrically conductive acids such as glycolates; and/or
• preventing a pH change of a heat-transfer composition, especially at temperatures greater than 100 °C, more preferably at temperatures greater than 120 °C; and/or
• improving the thermal stability of a heat-transfer composition.
